# EUROPÄISCHE PATENTSCHRIFT

(11) **EP 0 673 486 B1**
(45) Veröffentlichungstag und Bekanntmachung des Hinweises auf die Patenterteilung: **10.06.1998**
(21) Anmeldenummer: 94900809.8
(22) Anmeldetag: 12.11.1993
(51) Int. Cl.: F16L 55/05, F16L 55/033

(54) **WASSERSCHALLDÄMPFER ZUR VERWENDUNG IN EINEM ROHR**
WATERBORNE-SOUND ABSORBER FOR USE IN PIPES
AMORTISSEUR HYDROPHONIQUE UTILISABLE DANS UN TUBE

(30) Priorität: 09.12.1992 AT 2429/92
(43) Veröffentlichungstag der Anmeldung: 27.09.1995
(73) Patentinhaber: IDEAL-STANDARD GMBH, 53121 Bonn (DE)
(72) Erfinder: BECKER, Albert, D-54516 Wittlich/Lüxem (DE)
(74) Vertreter: Puchberger, Rolf, Dipl. Ing.
(86) Internationale Anmeldenummer: EP9303182
(87) Internationale Veröffentlichungsnummer: WO9413997

(56) Entgegenhaltungen:
- DE-A- 1 924 047
- DE-A- 3 034 109
- FR-A- 2 374 582

## Beschreibung

Die Erfindung betrifft einen Wasserschalldämpfer zur Verwendung in einem Rohr, welcher einen Einsatz aus elastischem Material enthält, der in einen Stützring mit zwei ringförmigen Abschnitten, die durch drei Stege miteinander verbunden sind, eingesetzt ist. Weiters betrifft die Erfindung ein Rohr mit darin eingesetztem Wasserschalldämpfer.

Der in Wasserleitungen vorhandene Druck erzeugt vorallem beim raschen Schließen und Öffen von Ventilen Geräusche von erheblicher Lautstärke. Bei modernen Wasserarmaturen, z.B., besteht die Tendenz den Bedienungsweg, sei es das Schwenken eines Hebels oder das Drehen eines Knopfes, zur Wasserentnahme möglichst kurz zu halten; dies ermöglicht aber ein plötzliches Schließen oder Öffen der Ventile. Da die Lärmschutzvorschriften in vielen Ländern in diesem Bereich jedoch einen niedrigen Lärmpegel vorschreiben, wurden schon zahlreiche Bemühungen unternommen Wasserschalldämpfer zu entwickeln, um sie in sanitäre Systeme einzubauen. So beschreibt die DE-OS 3 034 109 einen Wasserschalldämpfer mit einem elastischen Einsatz und einem Versteifungskäfig aus zwei Ringen und axial verlaufenden Vertindungsstegen. Bei einem in der FR-PS 2 374 582 geoffenbarten Wasserschalldämpfer ist ein aus zwei Ringen und diese verbindenden Stege geformter Käfig an der Innenseite eines Schlauches eingeformt.

Bei den genannten Wasserschalldämpfern fließt das Wasser durch den Einsatz aus elastischem Material, der sich je nach Druckanstieg wenig oder stark deformieren kann und so eine Geräuschverminderung bewirkt. Bei sehr großen Druck können die Stege bis zur Anlage an der Rohrinnenseite deformiert werden, was oft zu einer Beschädigung der Stege führt.

Aufgabe der vorliegenden Erfindung ist es, diese bekannten Wasserschalldämpfer zu verbessern und Deformationen zu vermeiden, die zu Beschädigungen führen.

Die Aufgabe wird dadurch gelöst, daß die Stege des Stützringes erfindungsgemäß nach außen ragende Höcker aufweisen. Sollte bei großem Druck die Deformation des Einsatzes so stark sein, daß der Einsatz gegen die Stege des Stützringes drückt, so werden die Höcker gegen die Innenwand des Rohres gedrückt, in welches der Wasserschalldämpfer eingesetzt ist, und es wird somit eine zu starke, möglicherweise irreversible Verformung der Stege verhindert.

Zur Verbesserung ist erfindunsgemäß jeder Steg über Rundungen mit jedem der ringförmigen Abschnitte verbunden. Dadurch erhöht sich vorallem die Stabilität der Stege.

Bei dem eingangs genannten Rohr mit darin eingesetztem Wasserschalldämpfer ist erfindungegemäß der Außenradius des unbelasteten Stützrings an den Stellen der Höcker kleiner als der Innenradius des Rohres. Der Stützring wird üblicherweise aus Kunststoff hergestellt und zeigt daher trotz seiner Stützfunktion eine gewisse Elastizität, die ausreicht um bei hohem Wasserdruck eine Verformung der Stege bis zur Anlage der Höcker an der Rohrinnenwand zu erlauben ohne den Stützring zu beschädigen. Der Unterschied in den obengenannten Radien ermöglicht eine einfache Montage.

Zur Verdeutlichung der Erfindung wird eine Ausführungsform des erfindurgsgemäßen Wasserschalldämpfers im Folgenden anhand der beiliegenden
Zeichnungen näher beschrieben.

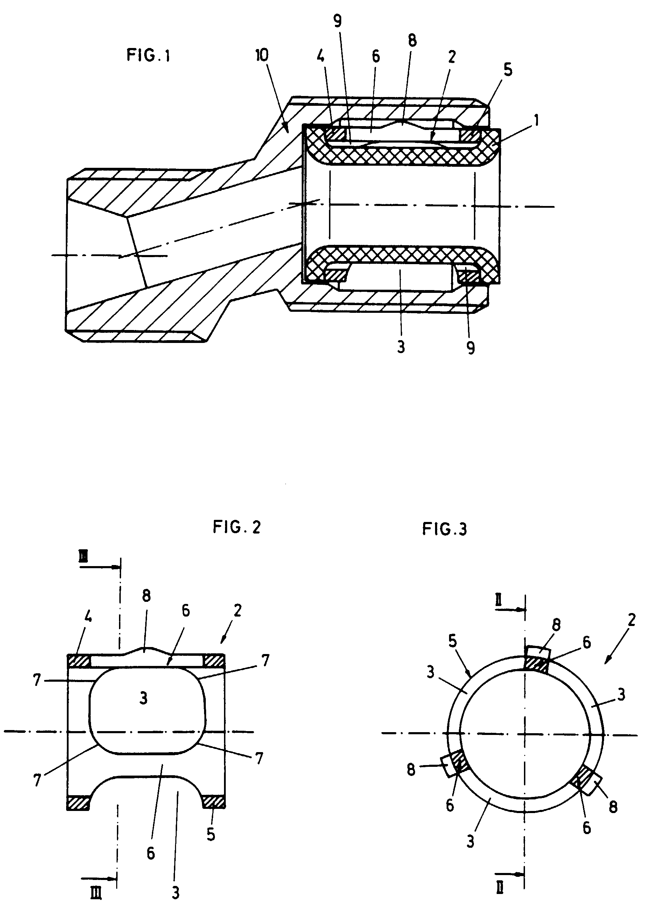

Dabei zeigt die Fig.1 einen Längsschnitt eines aus Einsatz und Stützring bestehenden, erfindungsgemaßen Wasserschalldämpfers , der in einen S-Anschluß eingesetzt ist. Fig.2 zeigt einen Längsschnitt des Stützringes aus Fig.1. Fig. 3 zeigt einen Querschnitt des Stützringes gemäß der Schnittlinie III-III in Fig.2.

Der in Fig. 1 dargestellte Einsatz 1 ist aus Gummi und hat die Form eines Hohlzylinders mit flanschartigen Ansätzen an beiden Seiten, die gleichzeitig als Dichtung dienen. Der zylinderförmige Abschnitt des Einsatzes 1 ist außen von einem Stützring 2 umgeben, der drei Durchbrüche 3 aufweist. Wie man den Figuren 2 und 3 entnehmen kann besteht der Stützring 2 aus zwei ringförmigen Abschnitten 4, 5 die durch drei Stege 6 miteinander verbunden sind. Die Übergänge von den Stegen 6 zu den ringförmigen Abschnitten 4, 5 sind Rundungen 7. Zwischen der Außenwand des zylindförmigen Abschnitts des Einsatzes 1 und der Innenwand des Stützringes 2 ist ein Abstand 9 vorgesehen, sodaß der Einsatz 1 sich unter Wasserdruck deformieren kann und erst bei höheren Drücken an den Innenwänden der Stege 6 zur Anlage kommt und darauf Druck ausübt. An den Stegen 6 sind nach außen ragende Höcker 8 vorgesehen. Die Höhe der Höcker 8 ist so gewählt, daß ohne Wasserdruck oder bei geringem Wasserdruck der Außenradius des Stützringes 2 an den Stellen der Höcker 8 geringer ist als Innenradius des S-Anschlusses 10 an der entsprechenden Stelle, sodaß die Höcker 8 die Innenwand des S-Anschusses 10 nicht berühren. Bei hohem Wasserdruck, d.h. wenn der Einsatz 1 derart stark deformiert wird, daß er gegen die Stege 6 drückt, werden die Stege 6 ebenfalls verformt, bis die Höcker 8 an der Innenwand des S-Anschlusses 10 anliegen. Die Höcker 8 verhindern also eine zu große, möglicherweise irreversible Deformation der Stege 6.

## Patentansprüche

1. Wasserschalldämpfer zur Verwendung in einem Rohr (10), welcher einen Einsatz (1) aus elastischem Material enthält, der in einen Stützring mit zwei ringförmigen Abschnitten (4, 5), die durch drei Stege (6) miteinander verbunden sind, eingesetzt ist, dadurch gekennzeichnet, daß die Stege (6) nach außen ragende Höcker (8) aufweisen.

2. Wasserschalldämpfer nach Anspruch 1, dadurch gekennzeichnet, daß jeder Steg (6) über Rundungen (7) mit jedem der ringförmigen Abschnitte (4, 5) verbunden ist.

3. Rohr (10) mit darin eingesetztem Wasserschalldämpfer nach Anspruch 1 oder 2, dadurch gekennzeichnet, daß der Außendurchmesser des unbelasteten Stützrings (2) an den Stellen der Höcker (8) kleiner ist als der Innerdurchmesser des Rohres (10).

## Claims

1. Water noise silencer for use in a pipe (10), containing an insert (1) of elastic material which is inserted into a support ring having two annular sections (4, 5) joined together by three crosspieces (6), characterised in that the crosspieces (6) have outwardly protruding protuberances (8).

2. Water noise silencer according to claim 1, characterised in that each crosspiece (6) is connected by means of rounded portions (7) to each of the annular sections (4, 5).

3. Pipe (10) having water noise silencers inserted therein in accordance with claim 1 or 2, characterised in that the outer diameter of the unloaded support ring (2) is smaller at the locations of the protuberances (8) than the inner diameter of the pipe (10).

## Revendications

1. Amortisseur hydrophonique, pour utilisation dans un tube (10), contenant une pièce d'insertion (1) réalisée en un matériau élastique, qui est insérée dans un anneau support comportant deux tronçons à forme annulaire (4, 5) reliés ensemble au moyen de trois nervures (6), caractérisé en ce que les nervures (6) présentent des bossages (8) faisant saillie vers l'extérieur.

2. Amortisseur hydrophonique selon la revendication 1, caractérisé en ce que chaque nervure (6) est reliée, par des arrondis (7), à chacun des tronçons à forme annulaire (4, 5).

3. Tube (10) équipé d'un amortisseur hydrophonique selon' la revendication 1 ou 2, monté à l'intérieur de celui-ci, caractérisé en ce que le diamètre extérieur de l'anneau support (2) non chargé, aux endroits où se trouvent les bossages (8), est inférieur au diamètre intérieur du tube (10).
